# FASCICULE DE BREVET EUROPEEN

(11) **EP 2 815 183 B1**
(45) Date de publication et mention de la délivrance du brevet: **14.11.2018**
(21) Numéro de dépôt: 13706655.1
(22) Date de dépôt: 08.02.2013
(51) Int. Cl.: F23R 3/14, F23R 3/28

(54) **DISPOSITIF D'INJECTION D'AIR ET DE CARBURANT POUR UNE CHAMBRE DE COMBUSTION D'UNE TURBOMACHINE**
LUFT- UND BRENNSTOFFEINSPRITZUNGSVORRICHTUNG FÜR EINE TURBOMASCHINENBRENNKAMMER
AIR AND FUEL INJECTION DEVICE FOR A TURBOMACHINE COMBUSTION CHAMBER

(30) Priorité: 15.02.2012 FR 1251401
(43) Date de publication de la demande: 24.12.2014
(73) Titulaire: Safran Aircraft Engines, 75015 Paris (FR)
(72) Inventeur: BUNEL, Jacques, Marcel, Arthur, F-77550 Moissy Cramayel Cedex (FR); MATHIEU, Frédéric, Marius, F-77550 Moissy Cramayel Cedex (FR); ULRYCK, Gilles, F-77550 Moissy Cramayel Cedex (FR)
(74) Mandataire: Robert, Mathias
(86) Numéro de dépôt international: PCT/FR2013/050264
(87) Numéro de publication internationale: WO 2013/121132

(56) Documents cités:
- EP-A1- 1 873 455
- FR-A1- 2 952 166
- FR-A1- 2 958 015
- US-A1- 2007 084 215
- US-A1- 2008 236 169

## Description

La présente invention concerne un dispositif d'injection d'air et de carburant pour une chambre de combustion d'une turbomachine, telle qu'un turboréacteur ou un turbopropulseur d'avion.

La demande de brevet FR 2 958 015, au nom de la Demanderesse, divulgue un dispositif d'injection d'air et de carburant comportant un injecteur de carburant central, entouré par une première paroi annulaire formant un premier venturi et délimitant extérieurement un premier canal d'admission d'air autour de l'injecteur central. Une seconde paroi annulaire entoure la première paroi et forme un venturi situé en aval du premier venturi. Un second canal d'admission d'air est délimité par les première et seconde parois annulaires. Un bol entoure enfin la seconde paroi annulaire et délimite avec celle-ci un canal annulaire périphérique dans lequel débouchent des orifices d'éjection de carburant d'un injecteur périphérique ou multipoint et des moyens d'amenée d'air.

Le document EP1873455 décrit un dispositif d'injection d'air et de carburant selon le préambule de l'objet de la revendication 1.

La périphérie radialement externe du bol comporte un rebord radial monté de façon mobile dans une gorge radiale délimitée par un fourreau fixé sur une paroi de fond de la chambre de combustion et par une bague de fermeture soudée au fourreau.

Le déplacement radial du rebord dans la gorge permet de compenser les déplacements relatifs entre l'injecteur et le carter sur lequel il est fixé, d'une part, et la chambre de combustion, d'autre part. De tels déplacements apparaissent en fonctionnement en raison des dilatations différentielles entre les divers éléments de la turbomachine.

Le fourreau comporte une paroi radiale et un rebord cylindrique s'étendant axialement vers l'amont depuis la périphérie radialement externe de la paroi radiale. Le rebord comporte une partie amont dont le diamètre interne correspond sensiblement au diamètre externe de la bague de fermeture, et une partie aval d'un diamètre interne inférieur, formant un épaulement servant à l'appui de la bague de fermeture. La dimension axiale de la partie aval formant l'épaulement définit la largeur de la gorge précitée.

La bague de fermeture est montée dans la partie amont du rebord. Cette bague comporte une paroi radiale dont la périphérie externe comprend un rebord cylindrique s'étendant axialement vers l'aval. La paroi radiale de la bague de fermeture s'appuie sur l'épaulement du fourreau.

Les bords libres aval des rebords du fourreau et de la bague de fermeture sont fixés l'un à l'autre par soudage, plus particulièrement par l'intermédiaire de quatre cordons de soudure régulièrement répartis sur toute la circonférence.

Une telle structure, bien que présentant une durée de vie importante, a une masse et un encombrement relativement importants.

L'invention a notamment pour but d'apporter une solution simple, efficace et économique à ce problème.

A cet effet, elle propose un dispositif d'injection d'air et de carburant pour une chambre de combustion d'une turbomachine, telle qu'un turboréacteur ou un turbopropulseur d'avion, comprenant un injecteur de carburant, au moins un premier élément monté sur l'injecteur de carburant ou relié à celui-ci et au moins un second élément, destiné à être monté sur une paroi de fond de la chambre de combustion, le premier élément comportant un rebord radial monté de façon mobile dans une gorge radiale du second élément, ladite gorge étant délimitée, d'une part, par un fourreau comportant une paroi radiale dont la périphérie externe comporte un rebord cylindrique et, d'autre part, par une bague de fermeture montée à l'intérieur du rebord cylindrique du fourreau, le fourreau et la bague de fermeture étant fixés l'un à l'autre par soudage, caractérisé en ce que la bague de fermeture comporte une paroi radiale et un rebord cylindrique s'étendant depuis la périphérie radialement externe de la paroi radiale, en direction de la paroi radiale du fourreau, et s'appuyant par son extrémité libre correspondante, sur la paroi radiale du fourreau, et en ce que l'extrémité libre du rebord cylindrique du fourreau comporte une surface radiale s'étendant dans le prolongement d'une surface radiale de la bague de fermeture, au moins un cordon de soudure s'étendant dans la zone de jonction entre le fourreau et la bague de fermeture, depuis les surfaces radiales précitées.

L'invention propose ainsi de modifier l'orientation du rebord périphérique externe de la bague de fermeture afin que celui-ci vienne s'appuyer sur la paroi radiale du fourreau. Ce dernier peut alors être dépourvu d'épaulement et il est possible de raccourcir la longueur axiale de son rebord cylindrique, de manière à réduire la masse et l'encombrement de l'ensemble tout en garantissant une durée de vie similaire à celle de l'art antérieur décrit ci-dessus. Une telle structure facilite également la circulation du flux d'air destiné à être mélangé au carburant.

Selon une caractéristique de l'invention, le rebord cylindrique de la bague de fermeture s'étend axialement de part et d'autre de sa paroi radiale.

Lorsque les rebords du fourreau et de la bague de fermeture sont soudés l'un à l'autre, les cordons de soudure s'étendent axialement dans la zone d'interface ou de jonction entre ces rebords. La caractéristique précitée permet notamment à la bague de fermeture de conserver une longueur de rebord suffisante pour avoir une soudure robuste, tout en ayant une paroi radiale relativement fine, la largeur de la gorge étant imposée par la longueur du rebord radial du premier élément.

De préférence, au moins un trou de contrôle du cordon de soudure traverse le rebord cylindrique du fourreau, de façon à déboucher dans la zone de jonction entre le fourreau et la bague de fermeture, en regard du cordon de soudure.

Dans l'art antérieur, la qualité des soudures est vérifiée par des contrôles destructifs. Le trou de contrôle précité permet de vérifier aisément et de manière non destructive les soudures réalisées. En effet, la pénétration de la soudure dans la zone d'interface ou de jonction entre les rebords du fourreau et de la bague de fermeture peut être constatée et mesurée directement au travers du trou de contrôle.

La distance entre l'extrémité libre du rebord cylindrique du fourreau et le trou de contrôle est comprise entre 1 et 2 mm.

A titre d'exemple, la pénétration de la soudure dans la zone d'interface ou de jonction entre les rebords du fourreau et de la bague de fermeture doit être au moins égale à 1,6 mm, pour les applications visées par la Demanderesse.

Avantageusement, le fourreau et la bague de fermeture sont fixés l'un à l'autre par au moins quatre cordons de soudure régulièrement répartis sur la circonférence et s'étendant chacun circonférentiellement sur une distance comprise entre 5 à 15 mm, préférentiellement sur une distance comprise entre 7 et 12 mm.

Selon une autre caractéristique de l'invention, le rebord cylindrique de la bague de fermeture a une longueur comprise entre 2 et 5 mm.

Le premier élément peut comporter au moins une paroi annulaire entourant l'injecteur et définissant au moins un canal annulaire d'admission d'air autour de l'injecteur.

En variante, le premier élément peut être une bague de guidage, montée autour de l'injecteur, comme dans la demande de brevet FR 2 925 146, au nom de la Demanderesse.

L'invention concerne également une turbomachine, telle qu'un turboréacteur ou un turbopropulseur d'avion, comportant une chambre de combustion comprenant au moins un dispositif d'injection d'air et de carburant du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe axiale d'une chambre annulaire de combustion équipée de dispositifs d'injection d'air et de carburant selon l'art antérieur,
- les figures 2 et 3 sont des vues en coupe longitudinale, de parties du dispositif d'injection d'air et de carburant de l'art antérieur,
- les figures 4 et 5 sont des vues en coupe longitudinale, de parties du dispositif d'injection d'air et de carburant selon l'invention.

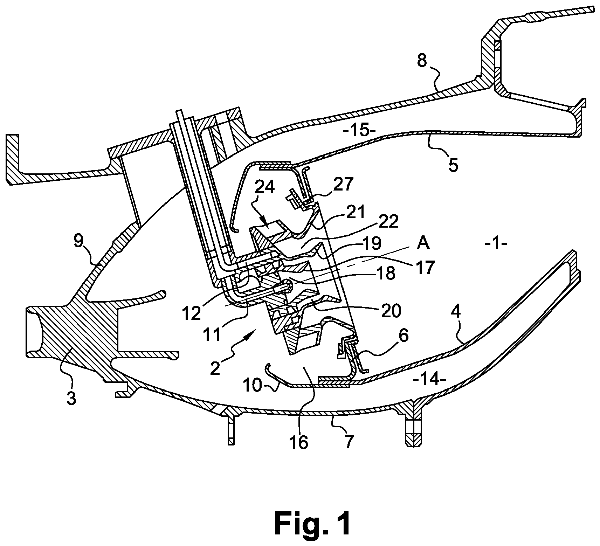

La figure 1 illustre une chambre de combustion annulaire de turbomachine 1, telle qu'un turboréacteur ou un turbopropulseur d'avion, équipée de dispositifs 2 d'injection d'air et de carburant selon l'art antérieur.

La chambre de combustion 1 est agencée en sortie d'un diffuseur 3, lui-même situé à la sortie d'un compresseur (non représenté). La chambre 1 comporte une paroi de révolution interne 4 et une paroi de révolution externe 5, reliées en amont par une paroi annulaire de fond de chambre 6 et fixées en aval par des brides interne et externe, respectivement sur un voile tronconique interne 7 du diffuseur 3 et sur un carter externe 8 de la chambre, l'extrémité amont de ce carter étant reliée à un voile tronconique externe 9 du diffuseur 3.

Un carénage annulaire 10 est fixé sur les extrémités amont des parois 4, 5 de la chambre 1 et comprend des orifices de passage d'air alignés avec des ouvertures de la paroi de fond de chambre 6 dans lesquelles sont montés les dispositifs 2 d'injection d'un mélange d'air et de carburant dans la chambre 1, l'air provenant du diffuseur 3 et le carburant étant amené par des injecteurs 11, 12 fixés sur le carter externe et régulièrement répartis autour de l'axe de la chambre. Chaque injecteur 11 comprend une tête 13 d'injection de carburant aligné sur l'axe A de l'ouverture correspondante.

Une partie du débit d'air fourni par le compresseur et sortant du diffuseur 3 alimente des conduits annulaires interne 14 et externe 15 de contournement de la chambre de combustion 1. L'autre partie du débit d'air pénètre dans l'enceinte 16 délimitée par le carénage 10, passe dans les dispositifs d'injection 2 et est ensuite mélangée au carburant amené par les injecteurs 11, 12 avant d'être pulvérisée dans la chambre de combustion 1.

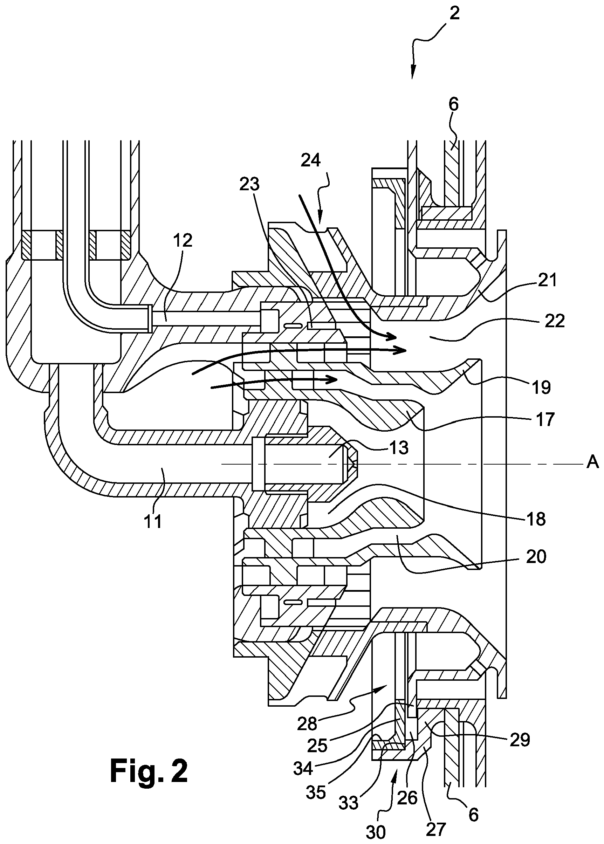

Comme cela est mieux visible à la figure 2, chaque dispositif 2 d'injection d'air et de carburant comporte un injecteur de carburant central 11 entouré par une première paroi annulaire 17 formant un premier venturi et délimitant extérieurement un premier canal d'admission d'air 18 autour de l'injecteur central 11. Une seconde paroi annulaire 19 entoure la première paroi 17 et forme un venturi en aval du premier venturi. Un second canal d'admission d'air 20 est délimité par les première et seconde parois annulaires 17, 19. Un bol 21 entoure enfin la seconde paroi annulaire 19 et délimite avec celle-ci un canal annulaire périphérique 22 dans lequel débouchent des orifices 23 d'éjection de carburant d'un injecteur périphérique 12 ou multipoint et des moyens d'amenée d'air 24.

Les canaux 18, 20 et les moyens d'amenée d'air 24 comportent classiquement des ailettes destinées à imprimer au flux d'air les traversant (représentés par des flèches) un mouvement de giration favorisant l'homogénéisation du mélange d'air et de carburant.

La périphérie radialement externe du bol 21 comporte un rebord radial 25 monté de façon mobile dans une gorge radiale 26 délimitée par un fourreau 27 fixé sur la paroi de fond 6 de la chambre de combustion 1 et par une bague de fermeture 28 soudée au fourreau 27.

Le déplacement radial du rebord 25 dans la gorge 26 permet de compenser les déplacements relatifs entre les injecteurs 11, 12 et le carter 8 sur lequel ils sont fixés, d'une part, et la chambre de combustion 1, d'autre part. De tels déplacements apparaissent en fonctionnement en raison des dilatations différentielles entre les divers éléments de la turbomachine.

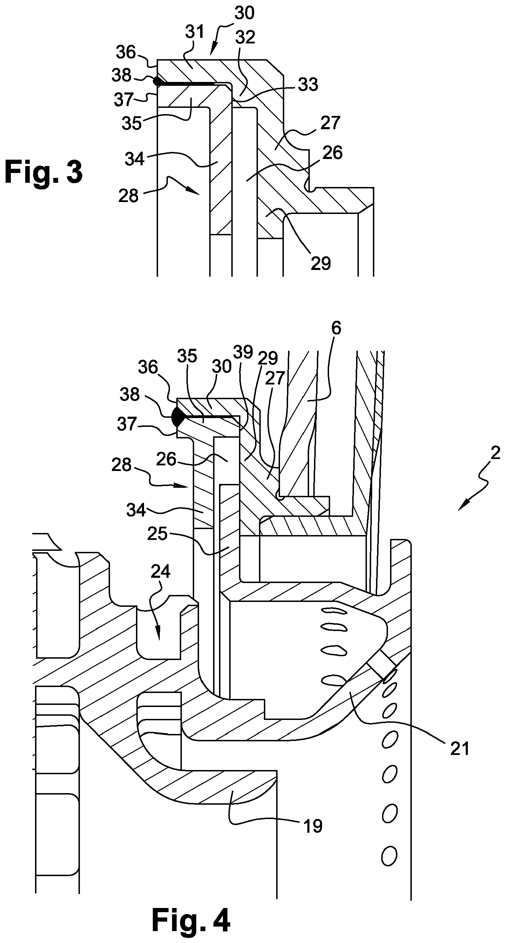

Comme cela est mieux visible à la figure 3, le fourreau 27 comporte une paroi radiale 29 et un rebord cylindrique 30 s'étendant axialement vers l'amont depuis la périphérie radialement externe de la paroi radiale 29. Le rebord 30 comporte une partie amont 31 (figure 3) dont le diamètre interne correspond sensiblement au diamètre externe de la bague de fermeture 28, et une partie aval 32 d'un diamètre interne inférieur, formant un épaulement 33 servant à l'appui de la bague de fermeture 28. La dimension axiale de la partie aval 32 formant l'épaulement 33 définit la largeur de la gorge 26 précitée.

La bague de fermeture 28 est montée à l'intérieur de la partie amont 31 du rebord 30 et comporte une paroi radiale 34 dont la périphérie externe comprend un rebord cylindrique 35 s'étendant axialement vers l'amont. La paroi radiale 34 de la bague de fermeture 28 s'appuie sur l'épaulement 33 du fourreau 27.

Les bords libres aval 36, 37 des rebords 31, 35 du fourreau 27 et de la bague de fermeture 28 sont fixés l'un à l'autre par soudage, plus particulièrement par l'intermédiaire de cordons de soudure 38 régulièrement répartis sur la circonférence et qui sont au nombre de quatre dans un exemple de réalisation.

Une telle structure, bien que présentant une durée de vie importante, a toutefois une masse et un encombrement relativement importants.

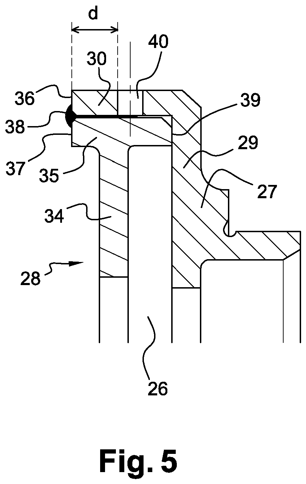

Les figures 4 et 5 illustrent partiellement un dispositif 2 d'injection d'air et de carburant selon l'invention, dans lequel le rebord cylindrique 35 de la bague de fermeture 28 s'étend axialement de part et d'autre de la paroi radiale 34. Le rebord cylindrique 30 et la paroi radiale 29 du fourreau 27 sont en outre dépourvus d'épaulements.

L'extrémité aval 39 du rebord cylindrique 35 de la bague de fermeture 28 vient ainsi directement en appui sur la paroi radiale 29 du fourreau 27.

La longueur de la partie aval du rebord 35, s'étendant au-delà de la paroi radiale 34, est définie en fonction de la largeur souhaitée de la gorge 26, elle-même fonction de l'épaisseur du rebord radial 25 du bol 21.

La longueur totale du rebord 35 de la bague de fermeture 28 correspond à la distance entre la paroi radiale 29 et l'extrémité libre 36 du rebord 30 du fourreau 27. Cette longueur est par exemple comprise entre 2 et 5 mm.

De cette manière, les extrémités libres 36 et 37 des rebords 30 et 35, forment des surfaces radiales situées en regard l'une de l'autre.

Des cordons de soudure 38 sont réalisés dans la zone de jonction ou d'interface entre les deux rebords 30, 35, et s'étendent vers l'amont depuis les extrémités libres 36, 37, sur une distance au moins égale à 1,6 mm par exemple.

De préférence, quatre cordons de soudure 38 sont ainsi réalisés, les cordons 38 étant régulièrement répartis sur la circonférence et s'étendant chacun circonférentiellement sur une distance comprise entre 5 à 15 mm, préférentiellement sur une distance comprise entre 7 et 12 mm.

Des trous 40 de contrôle des cordons de soudure 38 traversent le rebord cylindrique 30 du fourreau 27 (figure 5), de façon à déboucher dans la zone de jonction entre le fourreau 27 et la bague de fermeture 28, en regard de chaque cordon de soudure 38.

La distance d entre l'extrémité libre 36 du rebord cylindrique 30 du fourreau 27 et le trou 40 est adaptée à la pénétration minimale à obtenir des cordons de soudure 38, soit 1,6 mm dans l'exemple décrit ci-dessus.

La suppression de l'épaulement 33 dans le dispositif 2 selon l'invention permet de raccourcir la longueur du rebord 30, afin de réduire l'encombrement et la masse de l'ensemble tout en garantissant une durée de vie similaire à celle de l'art antérieur décrit ci-dessus. Une telle structure facilite également la circulation du flux d'air destiné à être mélangé au carburant.

## Revendications

1. Dispositif (2) d'injection d'air et de carburant pour une chambre de combustion (1) d'une turbomachine, telle qu'un turboréacteur ou un turbopropulseur d'avion, comprenant un injecteur de carburant (11), au moins un premier élément (21) monté sur l'injecteur de carburant (11) ou relié à celui-ci et au moins un second élément (27, 28), destiné à être monté sur une paroi de fond (6) de la chambre de combustion (1), le premier élément (21) comportant un rebord radial (25) monté de façon mobile dans une gorge radiale (26) du second élément (27, 28), ladite gorge (26) étant délimitée, d'une part, par un fourreau (27) comportant une paroi radiale (29) dont la périphérie externe comporte un rebord cylindrique (30) et, d'autre part, par une bague de fermeture (28) montée à l'intérieur du rebord cylindrique (30) du fourreau (27), le fourreau (27) et la bague de fermeture (28) étant fixés l'un à l'autre par soudage (38), **caractérisé en ce que** la bague de fermeture (28) comporte une paroi radiale (34) et un rebord cylindrique (35) s'étendant depuis la périphérie radialement externe de la paroi radiale (34), en direction de la paroi radiale (29) du fourreau (27), et s'appuyant par son extrémité libre correspondante (39), sur la paroi radiale (29) du fourreau (27), et **en ce que** l'extrémité libre (36) du rebord cylindrique (30) du fourreau (27) comporte une surface radiale s'étendant dans le prolongement d'une surface radiale (37) de la bague de fermeture (28), au moins un cordon de soudure (38) s'étendant dans la zone de jonction entre le fourreau (27) et la bague de fermeture (28), depuis les surfaces radiales (36, 37) précitées.

2. Dispositif (2) selon la revendication 1, **caractérisé en ce que** le rebord cylindrique (35) de la bague de fermeture (28) s'étend axialement de part et d'autre de sa paroi radiale (34).

3. Dispositif (2) selon la revendication 1 ou 2, **caractérisé en ce qu'**au moins un trou (40) de contrôle du cordon de soudure (38) traverse le rebord cylindrique (30) du fourreau (27), de façon à déboucher dans la zone de jonction entre le fourreau (27) et la bague de fermeture (28), en regard du cordon de soudure (38).

4. Dispositif (2) selon la revendication 3, **caractérisé en ce que** la distance (d) entre l'extrémité libre (36) du rebord cylindrique (30) du fourreau (27) et le trou de contrôle (40) est comprise entre 1 et 2 mm.

5. Dispositif (2) selon l'une des revendications 1 à 4, **caractérisé en ce que** le fourreau (27) et la bague de fermeture (28) sont fixés l'un à l'autre par au moins quatre cordons de soudure (38) régulièrement répartis sur la circonférence et s'étendant chacun circonférentiellement sur une distance comprise entre 5 à 15 mm, préférentiellement sur une distance comprise entre 7 et 12 mm.

6. Dispositif (2) selon l'une des revendications 1 à 5, **caractérisé en ce que** le rebord cylindrique (35) de la bague de fermeture (28) a une longueur comprise entre 2 et 5 mm.

7. Dispositif (2) selon l'une des revendications 1 à 6, **caractérisé en ce que** le premier élément comporte au moins une paroi annulaire (17, 19, 21) entourant l'injecteur (11) et définissant au moins un canal annulaire (18, 20, 22) d'admission d'air autour de l'injecteur (11).

8. Turbomachine, telle qu'un turboréacteur ou un turbopropulseur d'avion, comportant une chambre de combustion comprenant au moins un dispositif (2) d'injection d'air et de carburant selon l'une des revendications 1 à 7.

## Patentansprüche

1. Einspritzvorrichtung (2) zum Einspritzen von Luft und Treibstoff für eine Brennkammer (1) eines Turbotriebwerks, wie etwa eines Turbostrahltriebwerks oder Turboprop-Triebwerks für Flugzeuge, enthaltend eine Treibstoffinjektor (11), zumindest ein erstes Element (21), das an den Treibstoffinjektor (11) angebracht oder mit diesem verbunden ist, und zumindest ein zweites Element (27, 28), das dazu bestimmt ist, an eine Kammerbodenwand (6) der Brennkammer (1) angebracht zu werden, wobei das erste Element (21) eine radiale Randleiste (25) aufweist, die in einer radialen Nut (26) des zweiten Elements (27, 28) beweglich gelagert ist, wobei die Nut (26) einerseits von einer Hülse (27) begrenzt ist, die eine radiale Wand (29) aufweist, deren Außenumfang eine zylindrische Randleiste (30) enthält, und andererseits von einem Schließring (28), der innerhalb der zylindrischen Randleiste (30) der Hülse (27) angebracht ist, wobei die Hülse (27) und der Schließring (28) durch Verschweißen (38) aneinander befestigt sind, **dadurch gekennzeichnet, dass** der Schließring (28) eine radiale Wand (34) und eine zylindrische Randleiste (35) enthält, die sich von dem radial äußeren Umfang der radialen Wand (34) in Richtung der radialen Wand (29) der Hülse (27) erstreckt und sich mit ihrem entsprechenden freien Ende (39) an eine radiale Wand (29) der Hülse (27) abstützt, und dass das freie Ende (36) der zylindrischen Randleiste (30) der Hülse (27) eine radiale Fläche aufweist, die sich in Verlängerung einer radialen Fläche (37) des Schließrings (28) erstreckt, wobei zumindest eine Schweißnaht (38) sich in dem Verbindungsbereich zwischen Hülse (27) und Schließring (28) von den vorgenannten radialen Flächen (36, 37) ausgehend erstreckt.

2. Vorrichtung (2) nach Anspruch 1, **dadurch gekennzeichnet, dass** die zylindrische Randleiste (35) des Schließrings (28) sich axial beiderseits seiner radialen Wand (34) erstreckt.

3. Vorrichtung (2) nach Anspruch 1 oder 2, **dadurch gekennzeichnet, dass** zumindest eine Bohrung (40) zum Überprüfen der Schweißnaht (38) durch die zylindrische Randleiste (30) der Hülse (27) hindurchführt, so dass sie der Schweißnaht (38) gegenüberliegend in den Verbindungsbereich zwischen Hülse (27) und Schließring (28) mündet.

4. Vorrichtung (2) nach Anspruch 3, **dadurch gekennzeichnet, dass** die Entfernung (d) zwischen dem freien Ende (36) der zylindrischen Randleiste (30) der Hülse (27) und der Prüfbohrung (40) zwischen 1 und 2 mm beträgt.

5. Vorrichtung (2) nach einem der Ansprüche 1 bis 4, **dadurch gekennzeichnet, dass** die Hülse (27) und der Schließring (28) über zumindest vier Schweißnähte (38) aneinander befestigt sind, die gleichmäßig über den Umfang verteilt sind und sich jeweils umfänglich über eine Entfernung zwischen 5 bis 15 mm, vorzugsweise über eine Entfernung zwischen 7 und 12 mm, erstrecken.

6. Vorrichtung (2) nach einem der Ansprüche 1 bis 5, **dadurch gekennzeichnet, dass** die zylindrische Randleiste (35) des Schließrings (28) eine Länge zwischen 2 und 5 mm hat.

7. Vorrichtung (2) nach einem der Ansprüche 1 bis 6, **dadurch gekennzeichnet, dass** das erste Element zumindest eine ringförmige Wand (17, 19, 21) aufweist, die den Injektor (11) umgibt und zumindest einen ringförmigen Kanal (18, 20, 22) zum Einlass von Luft um den Injektor (11) herum definiert.

8. Turbotriebwerk, wie etwa Turbostrahltriebwerk oder Turboprop-Triebwerk für Flugzeuge, enthaltend eine Brennkammer mit zumindest einer Vorrichtung (2) zum Einspritzen von Luft und Treibstoff nach einem der Ansprüche 1 bis 7.

## Claims

1. Device (2) for injecting air and fuel into a combustion chamber (1) of a turbine engine such as an airplane turboprop or turbojet, the device comprising a fuel injector (11), at least one first element (21) mounted on the fuel injector (11) or connected thereto, and at least one second element (27, 28) for mounting on an end wall (6) of the combustion chamber (1), the first element (21) having a radial rim (25) movably mounted in a radial groove (26) of the second element (27, 28), said groove (26) being defined firstly by a sheath (27) having a radial wall (29) with an outer periphery including a cylindrical rim (30), and secondly by a closure ring (28) mounted inside the cylindrical rim (30) of the sheath (27), the sheath (27) and the closure ring (28) being fastened to each other by welding (28), the device being **characterized in that** the closure ring (28) includes a radial wall (34) and a cylindrical rim (35) extending from the radially outer periphery of the radial wall (34) towards the radial wall (29) of the sheath (27) and bearing via its corresponding free end (39) against the radial wall (29) of the sheath (27), and **in that** the free end (36) of the cylindrical rim (30) of the sheath (27) includes a radial surface extending in line with a radial surface (37) of the closure ring (28), at least one weld bead (38) extending in the junction zone between the sheath (27) and the closure ring (28) from the above-mentioned radial surfaces (36, 37).

2. Device (2) according to claim 1, **characterized in that** the cylindrical rim (35) of the closure ring (28) extends axially on either side of its radial wall (34).

3. Device (2) according to claim 1 or claim 2, **characterized in that** at least one inspection hole (40) for inspecting the weld bead (38) passes through the cylindrical rim (30) of the sheath (27) so as to open out into the junction zone between the sheath (27) and the closure ring (28), facing the weld bead (38).

4. Device (2) according to claim 3, **characterized in that** the distance (d) between the free end (36) of the cylindrical rim (30) of the sheath (27) and the inspection hole (40) lies in the range 1 mm to 2 mm.

5. Device (2) according to any one of claims 1 to 4, **characterized in that** the sheath (27) and the closure ring (28) are fastened to each other by at least four weld beads (38) that are regularly distributed around the circumference, and each extending circumferentially over a distance lying in the range 5 mm to 15 mm, and preferably over a distance lying in the range 7 mm to 12 mm.

6. Device (2) according to any one of claims 1 to 5, **characterized in that** the cylindrical rim (35) of the closure ring (28) has length lying in the range 2 mm to 5 mm.

7. Device (2) according to any one of claims 1 to 6, **characterized in that** the first element includes at least one annular wall (17, 19, 21) surrounding the injector (11) and defining at least one annular channel (18, 20, 22) for admitting air around the injector (11).

8. Turbine engine, such as an airplane turboprop or turbojet, including a combustion chamber having at least one air and fuel injection device (2) according to any one of claims 1 to 7.
